# EUROPÄISCHE PATENTANMELDUNG

(11) **EP 1 674 750 A2**
(43) Veröffentlichungstag der Anmeldung: **28.06.2006**
(21) Anmeldenummer: 05024192.6
(22) Anmeldetag: 07.11.2005
(51) Int. Cl.: F16D 3/38

(54) **Kreuzgelenkverbindung und Kreuzgelenkanordnung**

(30) Priorität: 23.12.2004 DE 102004063344
(71) Anmelder: Voith Turbo GmbH & Co. KG, 89522 Heidenheim (DE)
(72) Erfinder: Grawenhof, Peter, 89547 Dettingen (DE)
(74) Vertreter: Dr. Weitzel & Partner

(57) **Zusammenfassung**

Die Erfindung betrifft eine Kreuzgelenkverbindung (1) zur drehfesten Kopplung zwischen zwei Anschlusselementen, einem ersten Anschlusselement (4) und einem zweiten Anschlusselement (5)
- mit einer Kreuzgelenkanordnung (6), umfassend zwei um 90° zueinander versetzt angeordnete Gelenkgabeln (7,8), wobei jede der Gelenkgabeln mit einem der Anschlusselemente (2,3) drehfest verbindbar ist;
- mit einem Zapfenkreuz (9) zur drehfesten Kopplung der beiden um 90° zueinander versetzt gelagerten Gelenkgabeln, umfassend zwei um 90° zueinander versetzt angeordnete Zapfenanordnungen (31,32), welche zwei um 180° zueinander versetzt angeordnete Zapfen (33,34,35,36) umfassen;
- mit Mitteln zur Unterbrechung des Stromflusses zwischen dem Anschlusselement und der Gelenkgabel und umgekehrt.

## Beschreibung

Die Erfindung betrifft eine Kreuzgelenkverbindung, im Einzelnen mit den Merkmalen aus dem Oberbegriff des Anspruchs 1; ferner eine Kreuzgelenkanordnung.

Zum Antrieb von Schienenfahrzeugen sind eine Mehrzahl von Antriebskonzepten bekannt. Gemeinsam ist allen Systemen, dass der Antrieb der Räder vom Motor über mechanische Verbindungselemente (Getriebekupplungen) erfolgt. Diese stellen in der Regel eine stromleitende Verbindung dar, so dass bei Potenzialunterschieden zwischen Wagen und Schiene ungewollte Störströme fließen können.

Der Erfindung liegt daher die Aufgabe zugrunde, einen Isolator in Form einer Gelenkwellenverbindung zwischen dem Radsatzgetriebe, welches Schienenpotenzial besitzt und den angrenzenden Aggregaten, welche Wagenpotenzial besitzen, zu realisieren. In neuester Zeit häufig angewendet werden elektrische Antriebssysteme, bei denen als Energiequelle ein öffentliches Netz genutzt wird. Der Antrieb der Räder erfolgt über mindestens eine als Motor betreibbare elektrische Maschine, die entweder jedem Rad einzeln oder einer Mehrzahl von Rädern gemeinsam zugeordnet ist. Die elektrische Maschine kann auch generatorisch betrieben werden. Die elektrische Maschine ist dabei über eine Wechselrichtereinheit elektrisch mit dem öffentlichen Netz, insbesondere einer Oberleitung gekoppelt. Dazu sind wenigstens zwei Leiter in Form von geschirmten Kabeln, die mit dem elektrischen Hin- und Rückleiter des öffentlichen Netzes verbunden sind, vorgesehen. Für den Fall eines Isolationsfehlers kann jedoch nicht sichergestellt werden, dass entweder über einen Fehlerstromschutzschalter oder eine Überstromsicherung der Antrieb sicher abgeschaltet werden kann, da hierfür immer eine belastbare Erdverbindung sichergestellt sein muss. In diesem Fall würde dann eine externe Person beim Berühren eines spannungsführenden Teils des Rahmens von draußen einen lebensgefährlichen Stromschlag erleiden. Ferner erfolgt der Antrieb der Räder hier in der Regel nicht direkt, sondern über entsprechende mechanische Übertragungselemente, beispielsweise in Form von Gelenkwellen, die dann ebenfalls bei einem derartigen Fehler elektrischen Strom leiten. Während die elektrische Antriebsmaschine noch über Isolatoren aufgehängt am Rahmen angeordnet werden kann, ist dies bei Gelenkwellen in der Regel nur schwer möglich.

Der Erfindung liegt daher die Aufgabe zugrunde, derartige Nachteile beim Einsatz von Gelenkwellen in Schienenfahrzeugen zu vermeiden. Insbesondere ist eine Gefährdung für Passagiere und externe Personen durch Spannungen über den Fahrzeugrahmen beziehungsweise Teile von diesem zu vermeiden.

Die erfindungsgemäße Lösung ist durch die Merkmale der Ansprüche 1 und 7 charakterisiert. Vorteilhafte Ausgestaltungen sind in den Unteransprüchen beschrieben.

Erfindungsgemäß findet eine stromisolierende Kreuzgelenkverbindung zwischen zwei miteinander in drehmomentübertragender Weise zu koppelnden Elementen Verwendung. Die Kreuzgelenkverbindung umfasst dabei zumindest eine Kreuzgelenkanordnung, welche zwei um 90 Grad zueinander versetzte Gelenkgabeln umfasst, die jeweils mit einem Anschlusselement drehfest verbindbar, im Einsatzfall drehfest verbunden sind und die die Anschlusselemente über ein in den Gelenkgabeln gelagertes Zapfenkreuz miteinander koppeln. Über diese Verbindung erfolgt die Drehmomentenübertragung. Erfindungsgemäß werden dazu Mittel zur Unterbrechung eines Stromflusses, insbesondere unerwünschten Stromflusses in Form von Isolatoren, d. h. wenigstens einem Isolator eingesetzt. Dabei sind zur Realisierung einer stromisolierenden Kreuzgelenkverbindung zumindest zwei Lösungsansätze möglich, wobei der erste durch stromisolierende Mittel, das heißt Isolatoren zwischen einem Anschlusselement und der mit diesem verbundenen Gelenkgabel und der zweite durch stromisolierende Mittel, das heißt Isolator zwischen zwei um 180° zueinander versetzt angeordnete Zapfen des Zapfenkreuzes und der Gelenkgabel, in welcher diese gelagert sind, charakterisiert sind.

Aufgabe der stromisolierenden Mittel ist es dabei, eine Stromsperre an beliebiger Stelle in der Kreuzgelenkverbindung zu bilden. Die Unterbrechung wird dadurch realisiert, dass zwei ansonsten in Kontakt miteinander stehende Elemente, insbesondere zumindest teilweise flächig aneinander anliegende und vorzugsweise in Kraftflussrichtung liegende Elemente voneinander elektrisch isoliert werden. Die Isolation erfolgt dabei durch entsprechende Isolatoren und eventuell zusätzlich unter Bildung eines Luftspaltes, wobei hier die isolierende Wirkung des Luftspaltes genutzt wird. Dabei wird unter Isolator ein Isolierstoff verstanden, welcher durch einen hohen elektrischen Widerstand charakterisiert, der keinen Stromfluss zulässt.

Gemäß dem ersten Lösungsansatz ist der Isolator zwischen dem Anschlusselement und dem Flanschteil einer Gelenkgabel vorgesehen. Dabei ist sicherzustellen, dass keine leitende Berührung zwischen der Gelenkgabel und dem Anschlusselement entsteht. Da die formschlüssige oder kraftschlüssige Verbindung in der Regel zur Drehmomentübertragung in Umfangsrichtung erfolgt, sind zur Sicherung in axialer Richtung entsprechende Befestigungselemente vorzusehen, die wiederum ebenfalls aus nicht leitendem Material gefertigt sein müssen. Der Isolator kann dabei in Form eines Einzelelementes, insbesondere eines separaten Isolierelementes oder einer Beschichtung vorliegen. Im erstgenanten Fall erfolgt die Lagefixierung aufgrund der ohnehin erforderlichen Verbindung zwischen Anschlusselement und Gelenkgabel, vorzugsweise durch Einspannen zwischen diesen. Bei Ausführung der Mittel zur Stromisolierung als separates Element ist dieses vorzugsweise ferner derart ausgeführt, dass je nach Ausgestaltung der Kontaktflächen am Anschlusselement und an der Flanschseite der Gelenkgabel die mit diesen in Kontakt bringbaren Stirnseiten beziehungsweise Stirnflächen des Isolierelementes mit entsprechend komplementärer Kontur ausgeführt sind, so dass hier ein Anliegen zum Zwecke des Kraftflusses gewährleistet ist. Die beiden miteinander zu verbindenden Elemente, Anschlusselement und Gelenkgabel, sind somit wenigstens mittelbar über das Isolierelement miteinander in Wirkverbindung bringbar. Sind Anschlusselement und Flanschunterseite mit formschlüssigen Mitnahmeelementen versehen, werden diese vorzugsweise am Isolierelement ebenfalls derart ausgebildet. Dabei ist jedoch sicherzustellen, dass das Isolierelement aus einem, die auftretenden Belastungen ertragenden Material gefertigt ist. Denkbar sind zum Beispiel hochfeste Kunststoffe oder Keramiken. In Analogie kann das separate Element auch aus einem gummielastischen Element ausgeführt sein, wobei dieses sich vorzugsweise elastisch an die Kontur und Flanschunterseite und Anschlusselement anlegt.

Gemäß einem zweiten Lösungsansatz ist zumindest ein Isolator zwischen dem Zapfenkreuz und der Gelenkgabel vorgesehen, in welcher das Zapfenkreuz gelagert ist. Je nach Aufbau kann die Isolierung dabei an unterschiedlichen Verbindungsstellen im Sinne von Kontaktbereichen angeordnet werden. Entscheidend ist, dass auf diese Art eine elektrische Entkopplung zwischen diesen beiden Elementen erfolgt. Die Kreuzgelenkanordnung umfasst dabei ein Zapfenkreuz, welches aus zwei um 90° zueinander versetzten Zapfenanordnungen besteht. Jede Zapfenanordnung umfasst zwei um 180° zueinander versetzt angeordnete Zapfen, die eine gemeinsame Zapfenachse aufweisen. Die einzelnen Zapfenanordnungen können dabei in einer Ebene oder aber in zwei zueinander parallelen Ebenen angeordnet sein, das heißt das Zapfenkreuz ist in diesem Fall als Zapfenkreuz mit versetzten Zapfen ausgeführt. Jeweils eine Zapfenanordnung ist dabei in einer über einen Flanschmitnehmer beziehungsweise eine Gelenkgabel mit einem Anschlusselement, das antriebsseitig oder abtriebsseitig angeordnet sein kann beziehungsweise mit entsprechenden Elementen koppelbar ist, verbunden. Die Gelenkgabel umfasst dazu zwei Lagerteile, welche ebenfalls um 180° zueinander versetzt angeordnet sind und die die Zapfen einer Zapfenanordnung aufnehmen. Jeder Zapfen einer Zapfenanordnung ist dabei über eine Lageranordnung im Lagerteil der Gelenkgabel gelagert. Der Isolator kann dabei zwischen dem Außendurchmesser des Zapfens und der Lageranordnung, innerhalb der Lageranordnung oder aber zwischen der Lageranordnung und dem Innenumfang der Lagerbohrung im Lagerteil angeordnet werden. Entscheidend ist, dass zwischen den einander benachbarten kontaktierenden Elementen die Isolierung derart vorgesehen ist, dass keine Berührung stattfindet und somit auch unter ungünstigsten Umständen die Leitung elektrischer Ströme vollständig verhindert wird. Dabei kann es sich auch hier entweder um die Ausbildung einzelner Elemente aus nicht leitendem Material oder aber um die Ausbildung einer Kontaktfläche mit einer stromisolierenden Beschichtung handeln. Denkbar ist auch die Ausführung der beiden miteinander in Wirkverbindung tretenden Kontaktflächen mit stromisolierender Beschichtung.

Bezüglich der Ausführung der Lageranordnung bestehen eine Vielzahl von Möglichkeiten. Im einfachsten Fall umfasst diese zumindest ein Radiallager, wobei dieses im Normalfall einen Innenring, einen Außenring und dazwischen angeordnete Wälzelemente umfasst. Die Laufbahnen für die Wälzelemente können dabei auch direkt von den Anschlusselementen, insbesondere dem Zapfenkreuz und/oder dem Innenumfang der Lagerbohrung gebildet werden. Dabei können sowohl der Außenring, der Innenring als auch die Wälzelemente aus stromisolierten beziehungsweise nicht leitendem Material gefertigt sein. Denkbar ist es ferner jeweils die Kontaktstellen zwischen
- dem Außenumfang des Zapfens und dem Innenumfang des Innenringes und/oder
- dem Außenumfang des Innenringes und den Wälzelementen und/oder
- dem Außenumfang der Wälzelemente und dem Innenumfang des Außenringes und/oder
- dem Außenumfang des Außenringes und dem Innenumfang der Lagerbohrung
   mit einer stromisolierenden Beschichtung zu versehen oder zwischen diesen separate Isolatoren in Form von Einzelelementen oder Isolierlagen anzuordnen. Wird auf Innenring und/oder Außenring verzichtet, erfolgt die Anordnung jeweils zwischen den die äußere Lauffläche bildende Elementen und der Lagerbohrung und/oder den die innere Lauffläche bildende Elementen und dem Zapfenkreuz. Bei Ausführung als Gleitlager gelten die Ausführungen analog für jeweils zwei eine Gleitpaarung untereinander bildende Elemente.

Zusätzlich ist beim Einbau ebenfalls darauf zu achten, dass hier bei einem möglichen unter Spannung stehen des Zapfenkreuzes keine Ströme fließen. Dies bedeutet, dass je nach Anordnung des axialen Lagers im Bereich der Zapfenwurzel oder aber am Zapfenende, das heißt stirnseitig, wobei die Anordnung zum Teil auch in einer an der Stirnseite angeordnete Zapfenbohrung erfolgen kann, ein Weiterleiten von Strömen über diese Elemente zur Gelenkgabel unterbunden wird.

Um einen Stromfluss zwischen dem Zapfenkreuz und der Gelenkgabel vollständig zu unterbinden, sind dabei zumindest die beiden einander gegenüberliegenden Zapfen gegenüber der Gelenkgabel mit der entsprechenden Isolierung versehen.

Wie bereits ausgeführt, kann die Isolierung durch
a) Ausbildung von Einzelelementen aus nicht leitendem Material und/oder
b) Zwischenanordnung von Zwischenelementen aus nicht leitendem Material und/oder
c) Beschichtung aus nicht leitendem Material realisiert werden.

Unter Isolatoren werden dabei Dielektrika verstanden. Die Valenzelektronen sind dabei so eng und fest an die Atome gebunden, dass eine elektronische Leitfähigkeit praktisch nicht auftritt. Die Bandstruktur der Isolatoren ist der Bandstruktur der Halbleiter sehr ähnlich, nur dass hier die Breite der verbotenen Zone wesentlich größer ist. Als Grenzlinie wird dabei die verbotene Zone als das 100-fache der thermischen Energie bei Raumtemperatur (300 Kelvin) festgelegt. Bei den verwendeten Isolatoren handelt es sich dabei um Stoffe mit einer Breite von ≥ 2,6 eV. Als Isolatoren werden vorzugsweise feste Stoffe verwendet, bei denen es sich hauptsächlich um Kautschuk oder Kunststoffe handelt. Diese sind durch eine Resistivität beziehungsweise einen spezifischen Widerstand von p > 10⁷ Ωm charakterisiert. Ferner handelt es sich bei diesen Stoffen um Stoffe, deren relative Dielektrizitätszahl ε_{R} (20°C/50Hz) vorzugsweise zwischen 2,5 und 12, vorzugsweise 2,5 und 8,5 liegt. Als weitere Isolatoren sind Holz- und Faserstoffe denkbar sowie ferner Keramik bei entsprechender Durchschlagsfestigkeit.

Die erfindungsgemäße Lösung ist für jegliche Art von Kreuzgelenkanordnungen zum Anschluss an Anschlusselemente denkbar. Dabei kann es sich bei den Anschlusselementen um Wellenstränge sowie um andere rotierende Elemente handeln. Bezüglich der Ausgestaltung der Gelenkgabeln bestehen keine Restriktionen. Diese können dabei einteilig oder mehrteilig ausgeführt sein. Ferner kann der Lagerteil mit Blind- oder Durchgangsöffnung versehen sein. Bezüglich der Ausgestaltung des Anschlusses an die Anschlusselemente bestehen ebenfalls keinerlei Restriktionen. Denkbar sind sowohl kraft- als auch formschlüssige Verbindungen.

Die erfindungsgemäße Lösung wird nachfolgend anhand von Figuren erläutert. Darin ist im Einzelnen folgendes dargestellt:
- Figur 1: verdeutlicht in schematisch vereinfachter Darstellung die Anordnung von Mitteln zur Unterbrechung des Stromflusses in einer Gelenkwelle gemäß einem ersten Lösungsansatz;
- Figur 2a bis 2c: verdeutlichen mögliche Ausgestaltungen der verwendeten Isolatoren;
- Figur 3: verdeutlicht anhand eines Axialschnittes durch eine Kreuzgelenkanordnung mögliche Anordnungen der Mittel zur Unterbrechung des Stromflusses zwischen dem Zapfen eines Zapfenkreuzes und der Gelenkgabel gemäß einem zweiten Lösungsansatz;
- Figur 4: verdeutlicht anhand von Tabellen mögliche verwendbare Isolatorwerkstoffe mit ihren physikalischen Eigenschaften.

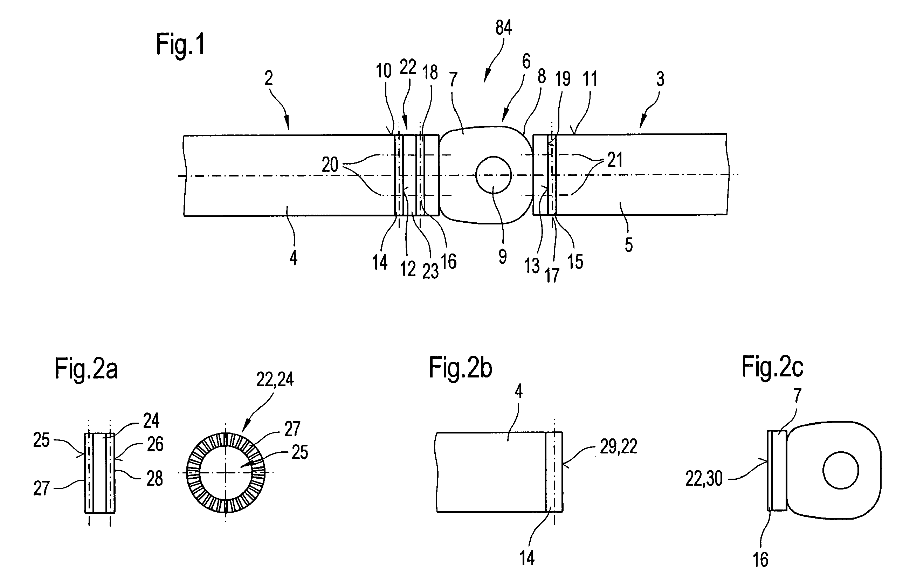

Die Figur 1 verdeutlicht in schematisch stark vereinfachter Darstellung anhand einer Ansicht von vorn auf einen Gelenkwellenstrang, umfassend zwei Gelenkwellen, eine erste Gelenkwelle 2 und eine zweite Gelenkwelle 3, die Ausführung einer stromisolierenden Gelenkwelle gemäß einem ersten Lösungsansatz. Die Verbindung beider bildet eine Kreuzgelenkverbindung 84. Die einzelnen Gelenkwellen 2 und 3 umfassen jeweils einen Wellenstrang 4 und 5. Beide Wellenstränge 4 und 5 sind in drehmomentübertragener Weise über ein Kreuzgelenk 6 miteinander gekoppelt. Dazu umfassen die Gelenkwellen 2 und 3 ferner jeweils eine Gelenkgabel 7 und 8, die über ein Zapfenkreuz 9 miteinander drehfest gekoppelt sind. Die einzelnen Gelenkgabeln 7 und 8 sind jeweils mit Anschlusselementen in Form von den Wellensträngen 4 und 5 drehfest in Umfangsrichtung gekoppelt. Die Verbindung kann vielgestaltig ausgeführt sein. In der Regel werden formschlüssige und/oder kraftschlüssige Verbindungen gewählt. Beispielsweise denkbar sind Ausführungen mit im Bereich des Außenumfanges 10 beziehungsweise 11 der einzelnen Wellenstränge 4 und 5 an den zur Gelenkgabel 7 und 8 weisenden Stirnseiten 12, 13 ausgebildeter, in Umfangsrichtung verlaufender Hirth-Stirnverzahnung 14 beziehungsweise 15, die mit einer dazu komplementär ausgeführten Hirth-Stirnverzahnung 16, 17 an den Gelenkgabeln 7 und 8 an den zu den Wellensträngen 4 und 5 weisenden Stirnflächen 18, 19 in Eingriff steht. Die Sicherung in axialer Richtung erfolgt dann über hier nur angedeutete Befestigungselemente 20 zwischen dem Wellenstrang 4 und der Gelenkgabel 7 beziehungsweise 21 zwischen dem Wellenstrang 5 und der Gelenkgabel 8. Die Gelenkwelle 2 ist dabei beispielsweise mit einem Antrieb drehfest verbindbar, während die Gelenkwelle 3 mit einem Abtrieb koppelbar ist. Denkbar ist auch der umgekehrte Fall, die Kopplung der Gelenkwelle 3 mit einem Antrieb und die Kopplung der Gelenkwelle 2 mit einem Abtrieb. Dabei kann der Wellenstrang 4 beziehungsweise der Wellenstrang 5 auch von rotationssymmetrisch ausgeführten Element gebildet werden. Erfindungsgemäß sind nunmehr in der Verbindung zweier drehfest miteinander koppelbaren leistungs- beziehungsweise drehmomentübertragenden Elemente Mittel 22 zur Unterbrechung des Stromflusses zwischen zwei in Kraftflussrichtung aneinander anliegenden Elementen angeordnet. Diese sind gemäß einem ersten Lösungsansatz in der Verbindung zwischen einem Anschlusselement beziehungsweise Wellenstrang 4 oder 5 mit einer Gelenkgabel 7 oder 8 vorgesehen. Im dargestellten Fall gemäß Figur 1 sind zwischen dem Wellenstrang 4 und der Gelenkgabel 7, insbesondere der zueinander weisenden Stirnflächen 12 an Wellenstrang 4 und 18 an der Gelenkgabel 7, die Mittel 22 zur Unterbrechung des Stromflusses in Form eines Isolators vorgesehen. Diese erstrecken sich dabei vollständig über die gesamte Kontaktfläche zwischen den Stirnseiten 12 und 18. Dabei kann es sich gemäß einer ersten Ausführungsform um ein separates Element, das heißt Einzelelement 23 handeln, welches zwischen den beiden miteinander zu koppelnden Elementen derart angeordnet ist, dass eine direkte Berührung beziehungsweise ein Kontakt zwischen den Stirnseiten 12 und 18 nicht mehr gegeben ist. Dies bedeutet, dass die beiden miteinander in drehmomentübertragender Weise zu koppelnden Elemente 4 und 7 elektrisch voneinander entkoppelt werden, indem die mechanische Kopplung quasi indirekt ohne direkten Kontakt erfolgt, das heißt über ein entsprechendes gestaltetes Isolierelement 23. Dies ist beispielhaft in der Figur 2a wiedergegeben. Hierbei handelt es sich um ein scheibenförmiges Element 24, welches an seinen beiden voneinander weg weisenden Stirnseiten 25 und 26 jeweils mit komplementären form- oder kraftschlüssigen Mitnahmeelementen zu den an den Stirnseiten 12 und 18 ausgeführten Mitnahmeelementen ausgebildet sind. Im dargestellten Fall beispielsweise in Form einer Hirth-Stirnverzahnung 27 beziehungsweise 28. Um des weiteren eine elektrische Kopplung zwischen den beiden miteinander zu verbindenden Elementen zu vermeiden, sind die Befestigungselemente 20 zwischen dem Wellenstrang 4 und der Gelenkgabel 7 ebenfalls aus elektrisch nicht leitfähigem Material gefertigt. Im einfachsten Fall handelt es sich hierbei um Kunststoffschrauben.

Die Figur 2b verdeutlicht eine alternative Ausgestaltung zur Ausbildung eines separaten Isolierelementes 23 mit entsprechend vorgesehener Beschichtung auf einem der beiden Anschlusselemente, wobei die Beschichtung sich auch hier über die gesamte Kontaktfläche erstreckt. Figur 2b verdeutlicht dabei beispielhaft die Anordnung der Beschichtung 29 am Wellenstrang 4, während Figur 2c die Anordnung an der Anschlussfläche der Gelenkgabel 7 wiedergibt, wobei die Beschichtung hier mit 30 bezeichnet ist. Als Materialien für die Isolierelemente 23 beziehungsweise die Beschichtungen 29 und 30 kommen dabei alle elektrisch und magnetisch nicht leitfähigen Materialien in Betracht, insbesondere Dielektrika. Im einfachsten Fall handelt es sich hierbei um Kunststoffelemente oder um Gummimaterialien, insbesondere Materialien aus Naturkautschuk. Ferner denkbar sind so genannte Pulververbund-Werkstoffe, die insbesondere bei Ausbildung als separates Isolierelement 23 verpresst werden. Die Beschichtungen können unterschiedlich auf die miteinander zu koppelnden Elemente aufgetragen werden. Denkbar sind hier stoffschlüssige Verbindungen, beispielsweise mittels Verkleben oder Anvulkanisieren.

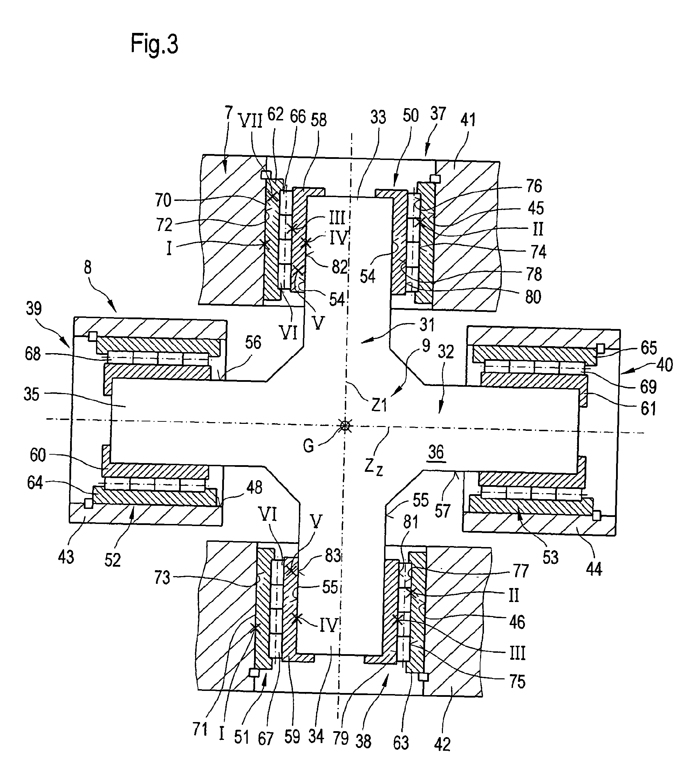

Verdeutlichten die Figur 1 sowie die Figuren 2a bis 2c die Anordnung der Mittel 22 zur Unterbrechung des Stromflusses zwischen zwei in Kraftflussrichtung aneinander anliegenden Elementen in der Verbindung zwischen einem Anschlusselement, insbesondere dem Wellenstrang 4 und der entsprechenden Kreuzgelenkanordnung, insbesondere einer Gelenkgabel 7, wobei die dort gelagerten Ausführungen auch auf den Wellenstrang 5 und die Gelenkgabel 8 übertragbar sind, zeigt die Figur 3 die Anordnungsmöglichkeit der Mittel 22 gemäß einem zweiten Lösungsansatz in der Kreuzgelenkanordnung 6. Hier erfolgt die Anordnung der Mittel 22 zur Unterbrechung des Stromflusses zwischen zwei in Kraftflussrichtung aneinander anliegenden Elementen zwischen dem Zapfenkreuz 9 und den jeweiligen Gelenkgabeln 7 oder 8 der miteinander zu koppelnden Gelenkwellen 2 beziehungsweise 3. Die Figur 3 verdeutlicht dazu einen statt schematisierten und hinsichtlich der Anordnung der Einzelelemente vereinfachten Axialschnitt durch eine Kreuzgelenkanordnung 6. Zu erkennen ist das Zapfenkreuz 9. Dieses umfasst jeweils zwei um 90° zueinander versetzt in Umfangsrichtung angeordnete Zapfenanordnungen 31 und 32, wobei jede der Zapfenanordnungen 31 und 32 jeweils zwei um 180° zueinander versetzt angeordnete Zapfen 33 und 34 für die Zapfenanordnung 31 und 35 und 36 für die Zapfenanordnung 32 umfassen. Die Zapfen 33 und 34 liegen dabei auf einer ersten Zapfenachse Z1, die Zapfen 35 und 36 sind durch eine zweite gemeinsame Achse Z2 charakterisiert. Beide Zapfenachsen Z1 und Z2 sind um 90° in Umfangsrichtung zueinander versetzt angeordnet und können je nach Ausführung entweder in einer Ebene liegen oder aber in zwei in axialer Richtung zueinander versetzten Ebenen. Der Schnittpunkt beider und im letztgenannten Fall bei Projizierung beider Achsen einer Ebene der Schnittpunkt verläuft dabei durch die Gelenkachse G. Jeder Zapfen 33 bis 36 ist dabei über eine Lageranordnung 37 bis 40 in den einzelnen Gelenkgabeln 7 und 8 gelagert. Dazu umfasst die einzelne Gelenkgabel 7 beziehungsweise 8 jeweils zwei Lagerteile, die Gelenkgabel 7 und die Lagerteile 41 beziehungsweise 42 Die Lagerteile für die Gelenkgabel 8 sind mit 43 und 44 bezeichnet. Jeder Lagerteil umfasst eine als Blind- oder Durchgangsöffnung ausgeführte Lagerbohrung 45 bis 49. Der einzelne Zapfen 33 bis 36 ist dabei über die Lageranordnung 37 bis 40 in der Lagerbohrung 45 bis 48 gelagert. Die Lageranordnungen 37 bis 40 können dabei unterschiedlich ausgeführt sein. Im einfachsten Fall umfassen diese zumindest ein Radiallager 50 bis 53. Erfindungsgemäß können die Mittel 22 nunmehr zwischen dem Außenumfang 54 bis 57 der einzelnen Zapfen 33 bis 36 und der Lagerbohrung 45 bis 49 vorgesehen sein. Die Figur 3 verdeutlicht dabei anhand einer Ausführung des Radiallagers 50 bis 53 in Form eines Wälzlagers mit jeweils einem Innenring 58 bis 61, einem Außenring 62 bis 65 und dazwischen angeordneten Wälzelementen 66 bis 69 mögliche Anordnungen der Mittel 22. Diese können dabei jeweils an den Positionen I -IV zumindest an den aneinander anliegenden benachbarten Elementen angeordnet sein. Die Position beziehungsweise der Bereich I betrifft jeweils für zwei Zapfen 33 und 34 einer Zapfenanordnung 31, hier beispielhaft dargestellt , oder aber 35 und 36 einer Zapfenanordnung 32 die Kontaktflächen zwischen dem Außenumfang 70 beziehungsweise 71 der Außenringe 62 und 63 des Radiallagers 50 und 51 und dem Innenumfang 72 beziehungsweise 73 der Lagerbohrung 45 beziehungsweise 46 der Lagerteile 41, 42 der Gelenkgabel 7. Dabei wird vorzugsweise zumindest die gesamte theoretische Kontaktfläche zwischen beiden Elementen isoliert. Gemäß II können die Mittel auch an den Kontaktflächen zwischen dem Außenumfang 74 beziehungsweise 75 der Wälzelemente 66, 67 und dem Innenumfang 76 beziehungsweise 77 des Außenringes 62 beziehungsweise 63, gemäß III zwischen dem Innenumfang 78 beziehungsweise 79 der Wälzelemente 66 beziehungsweise 67 und dem Außenumfang 80 beziehungsweise 81 des Innenringes 58, 59 und/oder gemäß IV zwischen dem Innenumfang 82 beziehungsweise 83 des Innenringes 58, 59 und dem Außenumfang 54, 55 der Zapfen 33, 34 vorgesehen sein. Die möglichen Anwendungen sind dabei mit X angegeben. Dabei bezieht sich X auf die gesamte Anlagefläche, insbesondere theoretische Anlagefläche. Dies bedeutet, dass die jeweils genannten Flächenbereiche gegeneinander isoliert sind. Dies kann durch separate Elemente oder aber im einfachsten Fall durch Beschichtung zumindest einer der miteinander kontaktierenden Flächen erfolgen. Denkbar ist es auch, dass wenigstens ein eine Kontaktfläche bildendes Element, entweder der Innenring, der Außenring oder die Wälzelemente des Radiallagers und/oder das Zapfenkreuz beziehungsweise die Gelenkgabel aus einem elektrisch nicht leitfähigen Material gefertigt ist. Dies ist dann durch die Möglichkeiten V,VI und VII für die einzelnen Elemente des Radiallagers verdeutlicht wiedergegeben, wobei V sich auf den Innenring 58 beziehungsweise 59 bezieht, VI auf die Wälzelemente 66 beziehungsweise 67 und VII auf den Außenring 62 beziehungsweise 63. Denkbar ist dies auch für die Gelenkgabel 7 oder das Zapfenkreuz 9, wobei hier auch entsprechend harte Materialien zu verwenden wären.

Wie bereits ausgeführt, kann bei Ausführung der Beschichtung diese entweder stoffschlüssig am Kontaktflächen bildenden Element aufgebracht werden oder aber anvulkanisiert werden. Für die Beschichtung sind unterschiedlichste Materialien denkbar, beispielsweise Keramik, Polyamide, Aluminiumoxide, Kunststoff usw. Dies bietet den Vorteil, dass das elektrisch nicht leitfähige Element gegenüber der Kontaktfläche in seiner Lage nicht veränderbar, insbesondere in axialer Richtung nicht verschiebbar ist. Denkbar ist jedoch auch, zwischen den einzelnen Flächen, die üblicherweise aneinander anliegen, zum Zwecke der Drehmomentübertragung ein separates Element anzuordnen, wobei dieses jedoch hinsichtlich seiner Lage derart zu fixieren ist, dass der Stromfluss auf jeden Fall unterbrochen wird, das heißt ein Kontakt der aneinander angrenzenden Bauelemente vermieden wird. Wie bereits ausgeführt, wird vorzugsweise die gesamte Kontaktfläche mit der entsprechenden Beschichtung versehen. Es ist jedoch auch denkbar, zwischen den im Kraftfluss liegenden miteinander zu koppelnden Elementen auch ein separates, elektrisch nicht leitfähiges Element vorzusehen, wobei durch dieses quasi eine Abstandshaltefunktion zusätzlich realisiert wird und in diesem Fall nicht zwangsläufig die gesamte theoretisch mögliche Kontaktfläche am Isolierelement anliegt, sondern zwischen den theoretisch möglichen Kontaktflächen quasi ein Luftspalt in isolierender Weise vorgesehen ist.

Um den Stromfluss im Zapfenkreuz zu unterbrechen, insbesondere im Übergang zwischen den zwei miteinander drehfest zu verbindenden Elementen, sind, wie bereits ausgeführt, diese Maßnahmen jeweils zumindest an den um 180° einander gegenüberliegenden Zapfen, das heißt den in einer Gelenkgabel gelagerten Zapfen vorzunehmen. Dabei ist es unerheblich, wie die Gelenkgabel selbst gestaltet ist. Die Gelenkgabel kann in einteiliger oder zumindest zweiteiliger Form vorliegen. Dabei genügt diese Maßnahme an der Verbindung des Zapfenkreuzes 9 mit einer Gelenkgabel, hier der Gelenkgabel 7. Vorzugsweise werden diese Maßnahmen an beiden vorgenommen. Die Isolatoren entsprechen sich dabei jeweils über den gesamten Umfang.

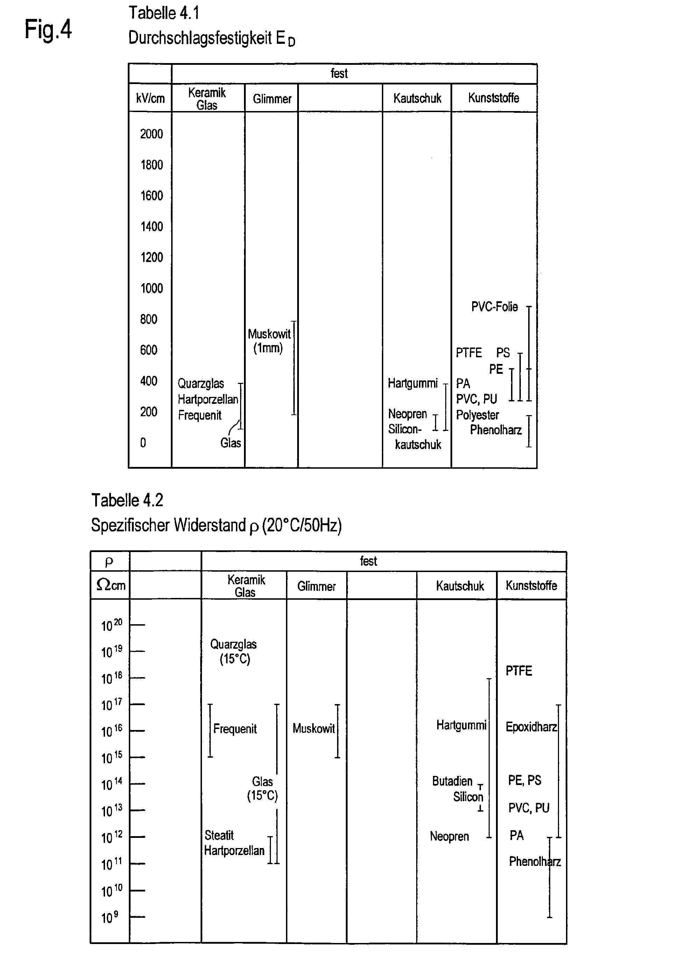

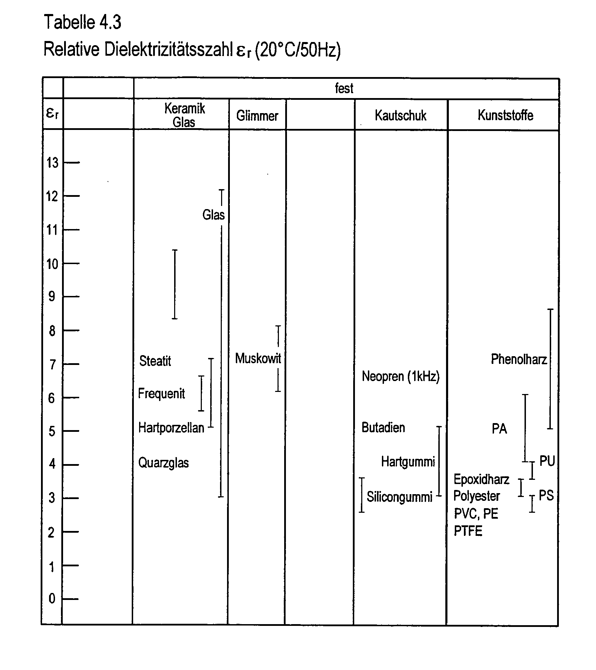

Die Figur 4 verdeutlicht anhand von Tabellen mögliche verwendbare Isolatoren und deren physikalische Eigenschaften. Wiedergegeben sind insbesondere der spezifische elektrische Widerstand p, die elektrische Dielektrizität.

Bei allen Ausführungen ist zumindest ein Isolator, das heißt ein Element oder eine Beschichtung aus einem Isolierwerkstoff vorgesehen, das heißt die Mittel 22 liegen in Ein-Komponentenform vor. Denkbar ist auch die Anwendung von Mehr-Komponentenverbänden, das heißt der Isolator besteht aus zwei oder mehreren elektrisch nicht leitfähigen Stoffen.

### Bezugszeichenliste

- 1: Gelenkwellenstrang
- 2: Gelenkwelle
- 3: Gelenkwelle
- 4: Wellenstrang
- 5: Wellenstrang
- 6: Kreuzgelenkanordnung
- 7: Gelenkgabel
- 8: Gelenkgabel
- 9: Zapfenkreuz
- 10: Außenumfang
- 11: Außenumfang
- 12: Stirnseite
- 13: Stirnseite
- 14: Hirth-Stirnverzahnung
- 15: Hirth-Stirnverzahnung
- 16: Hirth-Stirnverzahnung
- 17: Hirth-Stirnverzahnung
- 18: Stirnfläche
- 19: Stirnfläche
- 20: Befestigungselement
- 21: Befestigungselement
- 22: Mittel zur Unterbrechung des Stromflusses zwischen zwei in Kraftflussrichtung aneinander anliegenden Elementen
- 23: Isolierelement
- 24: Scheibenförmiges Element
- 25: Stirnseite
- 26: Stirnseite
- 27: Hirth-Stirnverzahnung
- 28: Hirth- Stirnverzahnung
- 29: Beschichtung
- 30: Beschichtung
- 31: Zapfenanordnung
- 32: Zapfenanordnung
- 33: Zapfen
- 34: Zapfen
- 35: Zapfen
- 36: Zapfen
- 37: Lageranordnung
- 38: Lageranordnung
- 39: Lageranordnung
- 40: Lageranordnung
- 41: Lagerteil
- 42: Lagerteil
- 43: Lagerteil
- 44: Lagerteil
- 45: Lagerbohrung
- 46: Lagerbohrung
- 47: Lagerbohrung
- 48: Lagerbohrung
- 50: Radiallager
- 51: Radiallager
- 52: Radiallager
- 53: Radiallager
- 54: Außenumfang
- 55: Außenumfang
- 56: Außenumfang
- 57: Außenumfang
- 58: Innenring
- 59: Innenring
- 60: Innenring
- 61: Innenring
- 62: Außenring
- 63: Außenring
- 64: Außenring
- 65: Außenring
- 66: Wälzelement
- 67: Wälzelement
- 68: Wälzelement
- 69: Wälzelement
- 70: Außenumfang
- 71: Außenumfang
- 72: Innenumfang
- 73: Innenumfang
- 74: Außenumfang der Wälzelemente
- 75: Außenumfang der Wälzelemente
- 76: Innenumfang des Außenringes
- 77: Innenumfang des Außenringes
- 78: Innenumfang der Wälzelemente
- 79: Innenumfang der Wälzelemente
- 80: Außenumfang des Innenringes
- 81: Außenumfang des Innenringes
- 82: Innenumfang des Innenringes
- 83: Innenumfang des Innenringes
- 84: Kreuzgelenkverbindung
- G: Gelenkachse
- Z1: Zapfenachse
- Z2: Zapfenachse
- I - IV: Positionen der Anordnung der Mittel 22
- V-VII: Positionen

## Patentansprüche

1. Kreuzgelenkverbindung (1) zur drehfesten Kopplung zwischen zwei Anschlusselementen, einem ersten Anschlusselement (4) und einem zweiten Anschlusselement (5)
1.1 mit einer Kreuzgelenkanordnung (6), umfassend zwei um 90° zueinander versetzt angeordnete Gelenkgabeln (7, 8), wobei jede der Gelenkgabeln (7, 8) mit einem der Anschlusselemente (2, 3) drehfest verbindbar ist;
1.2 mit einem Zapfenkreuz (9) zur drehfesten Kopplung der beiden um 90° zueinander versetzt gelagerten Gelenkgabeln (7, 8), umfassend zwei um 90° zueinander versetzt angeordnete Zapfenanordnungen (31, 32), welche zwei um 180° zueinander versetzt angeordnete Zapfen (33, 34, 35, 36) umfassen;
1.3 zwischen zwei aneinander angrenzenden Elementen ist wenigstens ein Isolator (22 ,23, 29, 30) angeordnet.

2. Kreuzgelenkverbindung (1) nach Anspruch 1, **dadurch gekennzeichnet, dass** der Isolator zwischen zwei aneinander angrenzenden Elementen zwischen wenigstens einem Anschlusselement (4, 5) und der mit diesem drehfest verbindbaren Gelenkgabel (7, 8) angeordnet sind.

3. Kreuzgelenkverbindung (1) nach einem der Ansprüche 1 oder 2, **gekennzeichnet durch** die folgenden Merkmale:
3.1 der Isolator ist als Einzelbauelemente in Form eines ein Isolierelementes (23), welches zwischen den zueinander weisenden Stirnflächen von Anschlusselement (4, 5) und Gelenkgabel (7, 8) angeordnet ist, ausgeführt;
3.2 mit aus einem Isoliermaterial ausgeführten Befestigungselementen zwischen Anschlusselement (4, 5) und Gelenkgabel (7, 8).

4. Kreuzgelenkverbindung (1) nach einem der Ansprüche 2 bis 3, **dadurch gekennzeichnet, dass** die Kontur der an die Stirnflächen von Anschlusselement (4, 5) und Gelenkgabel (7, 8) angrenzenden Stirnflächen des Isolierelementes (23) komplementär zu den Stirnflächen von Anschlusselement (4, 5) und Gelenkgabel (7, 8) ausgeführt ist.

5. Kreuzgelenkverbindung (1) nach Anspruch 1 oder 2, **dadurch gekennzeichnet, dass** wenigstens eine der miteinander zu koppelnden Stirnflächen vom Anschlusselement (4, 5) und/oder Gelenkgabel (7, 8) mit einem Isolator beschichtet ist und die durch den Isolator geführten Befestigungselemente zwischen Anschlusselement (4, 5) und Gelenkgabel (7, 8) aus einem Isoliermaterial ausgeführt sind.

6. Kreuzgelenkverbindung (1) nach Anspruch 5, **dadurch gekennzeichnet, dass** der Isolator an einer der Stirnflächen anvulkanisiert ist.

7. Kreuzgelenkanordnung (6)
7.1 mit einem Zapfenkreuz (9), umfassend zwei um 90° zueinander versetzt angeordnete Zapfenanordnungen (31, 32);
7.2 jede Zapfenanordnung (31, 32) umfasst zwei um 180° versetzt angeordnete Zapfen (33, 34, 35 36);
7.3 mit zwei Gelenkgabelanordnungen (7, 8), wobei jede der Gelenkgabelanordnung (7, 8) mit einem Anschlusselement (4, 5) koppelbar ist und beide Gelenkgabelanordnungen (7, 8) um 90° zueinander versetzt angeordnet sind;
7.4 jede Gelenkgabelanordnung (7, 8) umfasst zwei Lagerteile (41, 42, 43, 44);
7.5 jeder Zapfen (33, 34, 35, 36) einer Zapfenanordnung (31, 32) ist über eine Lageranordnung (37, 38, 39, 40) in einem Lagerteil (41, 42, 43, 44) der Gelenkgabel (7, 8) gelagert;
**gekennzeichnet durch** das folgende Merkmal:
7.6 zwischen dem Zapfenkreuz (9) und wenigstens einer Gelenkgabel (7, 8) ist wenigstens ein Isolator vorgesehen.

8. Kreuzgelenkanordnung (6) nach Anspruch 7, **dadurch gekennzeichnet, dass** die Lageranordnung (37, 38, 39, 40) mindestens ein Radiallager (50, 51, 52, 53) umfasst, welches als Wälzlager ausgeführt ist und eine erste innere Lauffläche bildendes Element (58, 29, 60, 61) und eine zweite äußere Lauffläche bildendes Element (62, 63, 64, 65) aufweist, wobei Mittel (22) zur Isolierung in Form des wenigstens einen Isolators an zumindest einer der nachfolgend genannten Verbindungslagerteilen zwischen einander benachbart angeordneten Elementen vorgesehen ist:
- zwischen dem Außenumfang (54, 55, 56, 57) des Zapfenkreuzes (9) und dem Radiallager (50, 51, 52, 53) und/oder
- dem Innenumfang (72, 73, 74, 75) der Lagerbohrung des Lagerteils (41, 42, 43, 44) und dem Außenumfang (70, 71, 72, 73) des Radiallagers und/oder
- zwischen einem eine erste Lauffläche bildenden Element des Radiallagers (50, 51, 52, 53) und den Wälzelementen (66, 67, 68, 69) und/oder
- zwischen einem eine zweite äußere Lauffläche bildenden Element und den Wälzelementen (66, 67, 68, 69) des Radiallagers (50, 51, 52, 53).

9. Kreuzgelenkanordnung nach einem der Ansprüche 7 oder 8, **dadurch** charakterisiert, dass der Isolator von einem der nachfolgend genannten Elemente gebildet wird;
- dem die innere Lauffläche bildenden Element und/oder dem die äußere Lauffläche für die Wälzelemente (66, 67, 68 ,69) bildenden Element,
- dem Wälzelement,
- der Gelenkgabel,
- dem Zapfen.

10. Kreuzgelenkanordnung (6) nach Anspruch 7, **dadurch gekennzeichnet, dass** die Lageranordnung ein Radiallager in Form eines Gleitlagers umfasst und wenigstens zwei eine Gleitpaarung untereinander bildende Elemente gegeneinander elektrisch isoliert sind.

11. Kreuzgelenkanordnung (6) nach einem der Ansprüche 8 bis 10, **dadurch gekennzeichnet, dass** die Lageranordnung zusätzlich ein Axiallager umfasst, wobei wenigstens zwei in Kraftfluss liegende und miteinander in Wirkverbindung bringbare Elemente gegeneinander elektrisch isoliert sind.

12. Kreuzgelenkanordnung (6) nach Anspruch 11, **dadurch gekennzeichnet, dass** die Anordnung der Isolatoren zwischen Zapfen und Gelenkgabel in den einzelnen Lagern derart erfolgt, dass ein Stromfluss sicher unterbrochen wird.

13. Kreuzgelenkanordnung (6) nach einem der Ansprüche 7 bis 12, **dadurch gekennzeichnet, dass** die Anordnung der Isolatoren jeweils an zwischen den um 180° versetzt zueinander angeordneten Zapfen einer Zapfenanordnung und dem Lagerteil der Gelenkgabel erfolgt.

14. Kreuzgelenkanordnung nach einem der Ansprüche 7 bis 9, **dadurch** charakterisiert, dass der Isolator von einem Stoff mit einer Bandbreite von größer 2,6 eV gebildet wird.

15. Kreuzgelenkanordnung (6) nach einem der Ansprüche 7 bis 14, **dadurch gekennzeichnet, dass** der Isolator durch eine Resistivität von ρ ≥ 10⁷ Ωm charakterisiert ist.

16. Kreuzgelenkanordnung (6) nach einem der Ansprüche 7 bis 15, **dadurch gekennzeichnet, dass** der Isolator ein Stoff ist, dessen relative Dielektrizitätszahl ε_{R} im Bereich von 1,5 bis 12, vorzugsweise 2,5 und 8,5 liegt.

17. Kreuzgelenkanordnung (6) nach einem der Ansprüche 7 bis 16, **dadurch gekennzeichnet, dass** der Isolator ein Ein-Komponentenmaterial oder ein Mehr-Komponentenmaterial ist.
